(19) **Europäisches Patentamt**

**European Patent Office**

**Office européen des brevets**

(11) **EP 4 498 046 B1**

(12) **EUROPEAN PATENT SPECIFICATION**

(45) Date of publication and mention
of the grant of the patent:
**04.03.2026 Bulletin 2026/10**

(21) Application number: **23187337.3**

(22) Date of filing: **24.07.2023**

(51) International Patent Classification (IPC):
**G01G 23/01** *(2006.01)*

(52) Cooperative Patent Classification (CPC):
**G01G 23/01**

(54) **METHOD FOR OPERATING A WEIGHING SYSTEM AND WEIGHING SYSTEM**

VERFAHREN ZUM BETREIBEN EINER WAAGE UND WAAGE

PROCÉDÉ DE FONCTIONNEMENT D'UN SYSTÈME DE PESAGE ET SYSTÈME DE PESAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**29.01.2025 Bulletin 2025/05**

(73) Proprietor: **Sartorius Lab Instruments GmbH &
Co. KG
37079 Göttingen (DE)**

(72) Inventor: **HALLER, Julian
37079 Goettingen (DE)**

(74) Representative: **Novagraaf International SA
Chemin de l'Echo 3
1213 Onex, Geneva (CH)**

(56) References cited:
**EP-A1- 3 739 307**

## Description

The invention relates to a method for operating a weighing system, a weighing system, a computer program and a computer-readable storage medium.

In weighing applications, the mass of a sample which is to be weighed is typically much lower than the maximum capacity that can be handled by a given balance. In case the mass of the sample becomes very small compared to the maximum capacity, a major error contribution in the weight measurement stems from random variations which are mainly caused by unavoidable external influences like vibrations or air currents. These error contributions limit the minimum weight measurable by the balance which can be considered to be a reliable measurement result.

Depending on the application scenario, regulatory requirements pose limits on the lowest weight measurable by a given balance which is still deemed to constitute a valid weighing result, effectively defining a so-called minimum weight value or minimum net weight $m_{min}$ of the respective balance. E.g., for pharmaceutical applications, users are bound by requirements defined in the United States Pharmacopeia (USP) when selling drugs in the United States and by the European Pharmacopeia (Ph. Eur.) when selling drugs in Europe, provided that during the preparation or analysis of the respective drugs weight measurements are to be conducted.

Another limit for obtaining valid measurement results is based on the scale interval of the balance, whereas an absolute minimum weight value of the balance can be defined based on the scale interval. This absolute minimum weight value in turn constitutes the lowest minimum weight value achievable with a given balance. Typically, the actual minimum weight value is multiple times this optimal value, as the influence of random variations provides in real applications for a much higher minimum weight value which can be deemed as valid.

Document EP3739307A1 discloses a control system for controlling the quantities of items of a product comprising a weighing scale, a memory storage device comprising data of a target associated to the weight of at least one item and a processor in communication with the weighing scale and the memory storage device.

To avoid measurements close to or below the minimum weight value of a given balance, one either has to provide a balance with higher precision and/or smaller scale interval or measure larger amounts of substance with a mass sufficiently far from the minimum weight value. Both of these options result in high costs due to the need for more complex and therefore more expensive balances and/or higher costs of the total substance amount to be handled. Especially, in case of very expensive substances to be weighed, like active ingredients in pharmaceutical applications, there is a high demand for achieving low minimum weight values.

The object of the invention is to provide a cost-efficient weighing system which allows to achieve a low minimum net weight and a method for operating such a weighing system. The weighing system is usable in a flexible manner.

The object of the invention is solved by a method for operating a weighing system, the weighing system comprising a balance with a sample carrier for receiving a sample to be weighed, a weighing sensor connected to the sample carrier and adapted to measure weight values of the sample, and an electronic control apparatus for controlling the operation of the weighing system comprising a processing unit connected to the weighing sensor and a memory unit connected to the processing unit. The method comprises the following steps: An initial minimum weight value based on actual measurements of the standard deviation of the weighing system is stored in the memory unit. Then, a first weight value of the sample is measured by the weighing sensor. The first weight value is transmitted to the processing unit and the first weight value is compared with the initial minimum weight value by the processing unit. If the first weight value is smaller than the initial minimum weight value, the weighing system is set in an adaptive weighing mode by the processing unit. In the adaptive weighing mode of the weighing system, the processing unit determines an adapted minimum weight value based on the initial minimum weight value and a number of repeated weight measurements of the sample, and compares the adapted minimum weight value with an average weight value of the sample, wherein the average weight value is based on the first weight value and on weight values of the sample measured by the weighing sensor in the repeated weight measurements and being transmitted to the processing unit.

The term "connected" is understood here and in the following as "operably connected", if nothing else is stated.

The invention is based on the idea that the minimum net weight of a given balance, i.e. the minimum weight which can still be deemed to be a valid measurement result, can be reduced in an easy and efficient manner by taking a plurality of weight measurements of the same sample into account, wherein the minimum weight of the balance scales with the number of weight measurement repetitions. This effect is based on the fact that random variations typically show a normal distribution and decrease by averaging several weighing results, thereby effectively decreasing the standard deviation of the measurement result, which in turn defines the minimum weight of the balance. This approach allows obtaining valid measurement results without the need to use another balance with higher precision and/or smaller scale interval, thereby minimizing the cost of the weighing system.

Termed differently, use is made of a mathematical correlation according to which the standard deviation of the balance decreases as $s_n = s_1/\sqrt{n}$, with $s_1$ being

the standard deviation connected to the single measurement of the first weight value of the sample, n being the number of repeated measurements, including the measurement for obtaining the first weight value of the sample, and $s_n$ being the standard deviation connected to the mean of the weight values obtained in the repeated measurements.

At the same time, the adaptive weighing mode is only entered by the weighing system in case a single weight measurement of the sample is not in line with the initial minimum weight value. In this way, the use of the weighing system is facilitated for the user, as the additional adaptive weighing procedure is only presented and entered if actually needed.

The average weight value is especially determined as the arithmetic mean of the first weight value of the sample and all additional weight values of the sample measured in the repeated weight measurements.

The processing unit may terminate the adaptive weighing mode when the average weight value is higher than the adapted minimum weight value. As soon as the average weight value is higher than the adapted minimum weight value, the determined average weight value can be denoted as being a valid result. Thus, no additional repetitions of weight measurements are necessary anymore, such that by terminating the adaptive weighing mode at this point, a user easily recognizes a successful measurement. Thus, unnecessary further weighing repetitions can be avoided and the weighing system can be used for determining the weight of a next sample, thereby increasing the number of measurements being possible with the weighing system in a given amount of time.

The initial minimum weight value can be a mathematical function of a standard deviation of the balance determined in a calibration or performance check procedure. In this way, the initial minimum weight value can easily be connected to the standard deviation of the balance achievable in a given practical application scenario, thereby increasing the relevance of the chosen initial minimum weight value for the weighing application. Further, as the standard deviation must be determined in usual application scenarios anyways, there is also no additional effort for the user of the weighing system in determining the initial minimum weight value.

The calibration or performance check procedure can be based on regulatory requirements in the field of use of the weighing system.

E.g., if the weighing system is used for pharmaceutical applications, the calibration or performance check procedure can be based on the European Pharmacopeia (Ph. Eur.) or the United States Pharmacopeia (USP).

In case the weighing system is used for engine combustion applications, the calibration or performance check procedure can be based on Regulation No. 49 of the Economic Commission for Europe of the United Nations (UN/ECE) or the Title 40 Code of Federal Regulations Part 1065 - Engine Testing Procedures of the U.S. Environmental Protection Agency.

The specific regulation being taken into account for the calibration performance check procedure can thus be selected based on the intended application scenario of the weighing system.

The mathematical function for the initial minimum weight value can be a multiple of the standard deviation of the balance, e.g. based on the formula 2000 x f x s, with s being the standard deviation of the balance (especially with s being $s_1$ as defined before) and f being a user-defined safety factor. The user-defined safety factor f is especially chosen in the range of $1 \leq f \leq 3$.

The weighing sensor can also be configured to be run in alternative measurement modes, wherein the initial minimum weight value can be obtained in at least one of the further measurement modes of the weighing sensor and stored in the memory unit.

In one variant, the method further comprises the following steps: A lower bound minimum weight value is stored in the memory unit. Then, the lower bound minimum weight value is compared by the processing unit with the adapted minimum weight value, and, in case the adapted minimum weight value is smaller than the lower bound minimum weight value, the adapted minimum weight value is replaced with the lower bound minimum weight value. That is, by setting the lower bound minimum weight value, the lowest minimum weight value which is deemed to be achievable with the given weighing system is defined. Thus, even if an adapted minimum weight value is calculated which is below the lower bound minimum weight value by repeating the weight measurement sufficiently often, the adapted minimum weight value is re-adjusted to the defined lower bound minimum weight value. In this way, the lower bound minimum weight value defines an optimal minimum weight value of the weighing system. Thus, if the adapted minimum weight value reaches this lower bound minimum weight value, further repetitions of the weight measurements of the sample can be avoided.

Accordingly, the processing unit can terminate the adaptive weighing mode after the adapted minimum weight value has been replaced by the lower bound minimum weight value.

The lower bound minimum weight value can be a fixed value or can be user-adaptable.

The lower bound minimum weight value can be defined based on the scale interval of the balance. As the scale interval is fixed for a given balance, the scale interval is especially suited for forming the basis of the definition of the optimum minimum weight value of the weighing system. Especially, the lower bound minimum weight value is defined based on regulatory requirements in the intended application scenario of the weighing system, wherein the same regulatory requirements can be taken into account as for the definition of the standard deviation used for determining the initial minimum weight value.

E.g., in pharmaceutical applications, the lower bound minimum weight value can be defined based on the formula 820 x **d,** with d being the scale interval.

The weighing system can comprise a user interface, and, if the first weight value is smaller than the initial minimum weight value, the weighing system provides a first message to the user of the weighing system via the user interface that the adaptive weighing mode is to be initiated. In this way, situations can be avoided in which the user believes to have obtained a valid measurement result, though the first weight value actually is below the initial minimum weight value.

The user may provide an instruction to the weighing system, e.g. via the user interface, not to enter the adaptive weighing mode in response to receiving the first message. Accordingly, the user can choose whether he/she wants to take repeated weight measurements necessary in the adaptive weighing mode or if the first weight value of the sample is taken as such, even if the first weight value cannot be deemed to be a valid measurement result. This increases the flexibility in using the weighing system, as the user also can choose to use the weighing system as conventional weighing system which has no adaptive weighing mode available.

The method can further comprise the following steps: An estimated number of repeated measurements necessary to obtain an adapted minimum weight value which is smaller than the first weight value or the average weight value is calculated. Then, a second message indicative of the estimated number is provided to the user via the user interface. In this way, the user is informed how often the weight measurement presumably has to be repeated until the measurement result can be deemed to be a valid measurement result. Thus, situations can be avoided in which the user thinks to have already obtained a valid measurement result though still further repetitions of the weight measurement are necessary.

The second message can be provided to the user after each repeated weight measurement based on the average weight value which takes into account the weight value of the sample obtained in the respective weight measurement. Thus, the user can always be informed about an updated expected number of further measurements still necessary until the adapted minimum weight value is expected to be smaller than the average weight value.

The user may, after being provided with the second message, choose to continue with the adaptive weighing mode or to cancel the adaptive weighing mode. That is, after the user has obtained the information about the current estimated number of repeated measurement, he/she can flexibly choose whether it is still wished to continue with repetitions the weight measurements or not, thereby increasing the flexibility of the weighing system. Thus, situations can be avoided in which the user is stuck in the adaptive weighing mode and the weighing system is blocked for further measurement.

In yet another variant, the method further comprises the following steps: A maximum number of repeated measurements is stored in the memory unit. The maximum number of repeated measurements is compared by the processing unit with the estimated number of repeated measurements. Then, a third message is provided via the user interface to the user indicative of whether the maximum number of repeated measurements is lower than the estimated number of repeated measurements or not.

The maximum number can be chosen by the user in advance and e.g. can be entered via the user interface and transmitted to the processing unit and memory unit for storing the maximum number of repeated measurements.

It is also possible that the maximum number is automatically set based on a pre-defined security level of the weighing system. That is, if the pre-defined security level of the weighing system asks for a higher precision of the measurement results obtained by the weighing system, the maximum number of repeated measurements can be increased. If the pre-defined security level of the weighing system asks for a lower precision of the measurement results obtained by the weighing system, the maximum number of repeated measurements can be lowered.

The user, after being provided with the third message, may choose to continue with the adaptive weighing mode or to abort the adaptive weighing mode. That is, in cases in which the estimated number of repeated measurements exceeds the maximum number of repeated measurements, the user will be informed accordingly and the user can provide an instruction whether the adaptive weighing mode is still to be entered or not. Thereby, extensive measurement series which still cannot result in a valid measurement result can be avoided, thereby increasing the availability of the weighing system.

For associating the obtained measurement results of the weighing system with an additional information regarding the validity of the obtained measurement results, the method can further comprise the following steps: The first weight value and/or the average weight value is assigned by the processing unit with a validation information, wherein the validation information indicates whether the first weight value and/or the average weight value is smaller than the initial minimum weight value and the adapted minimum weight value, respectively, or not. Then, the first weight value and/or the average weight value are stored together with the associated validation information in the memory unit. The validation information provides the possibility to check if the measurement taken by the weighing system is compliant to a given regulation or not. Termed differently, the validation information provides the information, whether the measurement result can be deemed to be a valid measurement result or must be deemed as an invalid measurement result.

The terms "assign" and "assigning" means that one or more data sets are created which comprise the first weight value and/or the average weight value and the associated validation information.

The method can further comprise the following step: A counter indicative of the sample and an information on whether the adaptive weighing mode has been entered is stored in the memory unit. In this way, a measurement history of the weighing system can be built from which information can be retrieved how often it was necessary to enter the adaptive weighing mode.

The method further may comprise the following steps: Storing a pre-defined threshold value indicative of an allowed number of adaptive weighing mode weighing procedures in the memory unit. Identifying by the processing unit, based on the information on whether the adaptive weighing mode has been entered or not, if the adaptive weighing mode has been entered more often than defined by the pre-defined threshold value, and, if the adaptive weighing mode has been entered more often than defined by the pre-defined threshold value, providing a fourth message to the user via the user interface, wherein the fourth message provides the user with the information that the initial minimum weight value is to be adapted. This allows to identify use cases in which the adaptive weighing mode is entered too often because the initial minimum weight value is set too high, thus resulting in an excessive number of measurement procedures which need to enter the adaptive weighing mode, resulting in an unfavorable user experience and diminished sample throughput of the weighing system. E.g., the user, in response to receiving the fourth message, can adapt the user-defined safety factor for determining the initial minimum weight value.

The method can further comprise the following steps: A tare value of a receptacle in which the sample is to be placed on the sample carrier during weight measurements is measured. The tare value is transmitted to and stored in the memory unit of the electronic control apparatus. Then, the first weight value and, in the adaptive weight mode of the weighing system, the weight values obtained in the number of repeated measurements of the sample are corrected by the processing unit by subtracting the tare value from the first weight value and the weight values obtained in the number of repeated measurements. Thus, all weight measurements conducted by the weighing system can easily be adjusted by the tare value of the receptacle.

The object of the invention is further solved by a weighing system comprising a balance with a sample carrier for receiving a sample to be weighed, a weighing sensor connected to the sample carrier and adapted to measure weight values of the sample, and an electronic control apparatus for controlling the operation of the weighing system comprising a processing unit connected to the weighing sensor and a memory unit connected to the processing unit, the weighing system being configured to execute the method as described before.

Thus, the features and advantages described before for the method for operating a weighing system also apply for the weighing system according to the invention and vice versa.

Specifically, the processor of the processing unit is configured to cause the weighing system to execute the following steps: a) storing an initial minimum weight value in the memory unit, b) measuring, by the weighing sensor, a first weight value of the sample, c) transmitting the first weight value to the processing unit, d) comparing, by the processing unit, the first weight value with the initial minimum weight value, and e) setting, by the processing unit, the weighing system in an adaptive weighing mode, if the first weight value is smaller than the initial minimum weight value, wherein, in the adaptive weighing mode of the weighing system, the processing unit is configured to determine an adapted minimum weight value based on the initial minimum weight value and a number of repeated weight measurements of the sample, and is configured to compare the adapted minimum weight value with an average weight value of the sample, wherein the average weight value is based on the first weight value and on weight values of the sample measured by the weighing sensor in the repeated weight measurements and being transmitted to the processing unit.

For providing messages to the user and/or receiving instructions from the user of the weighing system, the weighing system can further comprise a user interface, the user interface being part of the balance or of the electronic control apparatus.

To provide for a compact weighing system, the balance and the electronic control apparatus can be contained within a common housing.

Alternatively, the electronic control apparatus can be a separate device being configured to receive and transmit information to and from the balance, respectively. That is, the electronic device can be an external computing device like a smartphone, a tablet, a central server providing a lab network environment or a server providing an Internet-of-Things environment.

In this alternative, the balance and the electronic control apparatus each comprise a respective communication module for establishing a communication link between the balance and the electronic control apparatus. The kind of communication link is not restricted, as long as sufficiently fast data transfer between the balance and the electronic control apparatus can be ensured. Thus, the communication link can be established cable-based or wireless.

The object of the invention is further solved by a computer program comprising instructions, when executed on a processing unit, to cause a weighing system to perform the steps of the method as described before.

Thus, the processing unit executing the computer program is the processing unit of the electronic control apparatus. The weighing system is especially a weighing system as described before.

Further, the object of the invention is solved by a computer-readable storage medium having stored thereon the computer program described before.

Further properties and advantages of the present invention will become more apparent from the following description of optional embodiments, and from the Figures. In the Figures:

- Fig. 1 schematically shows a first embodiment of a weighing system according to the invention;

- Fig. 2 shows a flow diagram of a method according to the invention for operating the weighing system of Fig. 1;

- Fig. 3 shows a flow diagram of additional steps in the method of Fig. 2;

- Fig. 4 schematically shows a second embodiment of the weighing system according to the invention; and

- Fig. 5 schematically shows a third embodiment of the weighing system according to the invention.

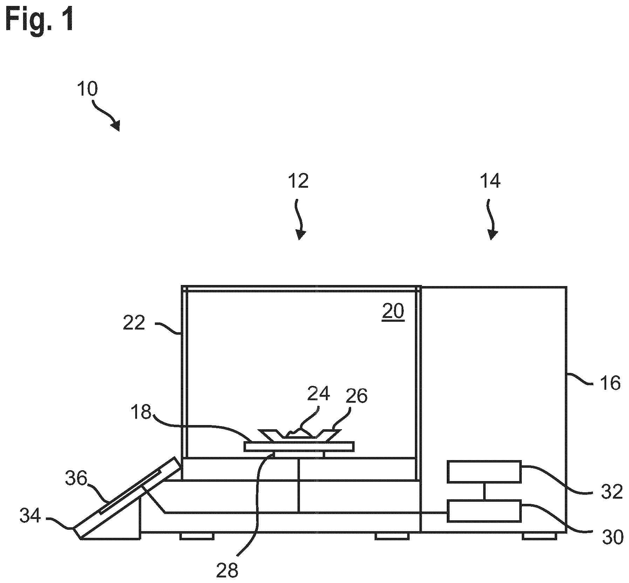

Fig. 1 shows a first embodiment of a weighing system 10.

The weighing system 10 comprises a balance 12 and an electronic control apparatus 14, wherein the balance 12 and the electronic control apparatus 14 are encompassed by a common housing 16, i.e. the balance 12 and the electronic control apparatus 14 are both contained in the common housing 16.

The balance 12 has a sample carrier 18 which is located within a measurement chamber 20. The measurement chamber 20 is surrounded by windshields 22 of which at least one is movable from a closed position to an open position in which a sample 24 can be placed in the measurement chamber 20, specifically on the sample carrier 18. The windshields 22, when being in the closed position, protect the sample 24 placed in the measurement chamber 20 at least partially from environmental influences like air currents, humidity, temperature variations, thereby increasing the measurement accuracy and precision of the balance 12.

Of course, the balance 12 could also have a different design than shown in Fig. 1, as long as a sufficiently precise and accurate measurement of the weight of the sample 24 can be realized. E.g., the balance 12 could have no windshields 22.

The type of sample 24 is not restricted and only depends on the given application scenario of the weighing system 10. E.g., the sample 24 is an active ingredient of a drug, i.e. the weighing system 10 is a weighing system for pharmaceutical applications. On the other hand, the sample 24 is a particulate filter for studying and analysing emission particulates, i.e. the weighing system 10 is configured as a weighing system in a set up for measuring and analysing particulates of vehicle exhaust/emissions.

As shown in Fig. 1, the sample 24 is placed within a receptacle 26 which is used for handling the sample 24.

The sample carrier 18 is connected to a weighing sensor 28 such that, when the sample 24 is placed on the sample carrier 18, the weighing sensor 28 can determine a weight value of the sample 24, and thus the mass of the sample 24, including the mass of the receptacle 26.

The electronic control apparatus 14 comprises a processing unit 30 which is connected to the weighing sensor 28 and thus receives the weight values of the sample 24 obtained by the weighing sensor 28. Further, the processing unit 30 is configured to control the operation of the weighing system 10.

The processing unit 30 is connected to a memory unit 32 for storing the weight values received from the weighing sensor 28 as well as other values and parameters used in the operation of the weighing system 10.

Further, in the memory unit 32, a computer program is stored which causes the processing unit 30 to execute a method for operating the weighing sensor 28 which will be described later in more detail.

The weighing system 10 also comprises a user interface 34, which in the shown embodiment is part of the balance 12.

The user interface 34 has a touch-sensitive display 36 which can display messages to a (not shown) user of the weighing system 10 and is configured to receive control instructions from the user. Especially, the display 36 is configured to display the weight value of the sample 24 currently placed on the sample carrier 18, wherein the minimum value displayable on the display 36 defines a scale interval d of the balance 12.

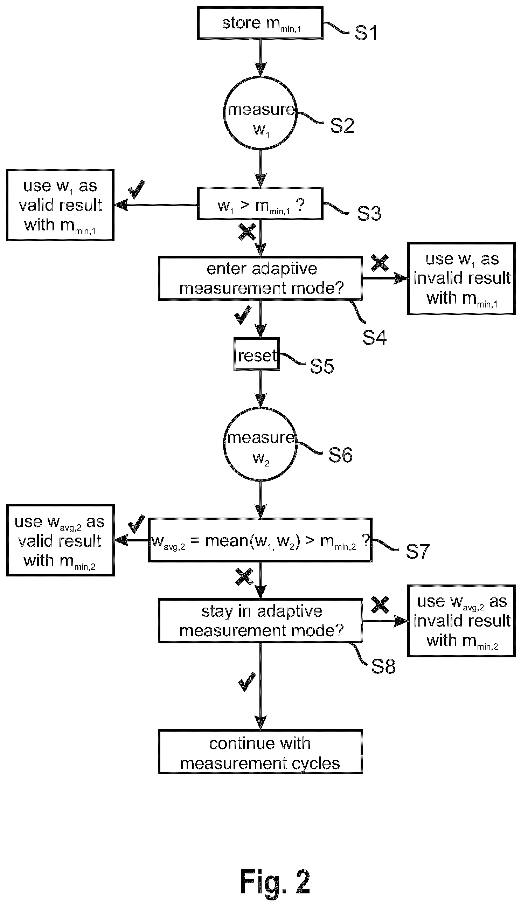

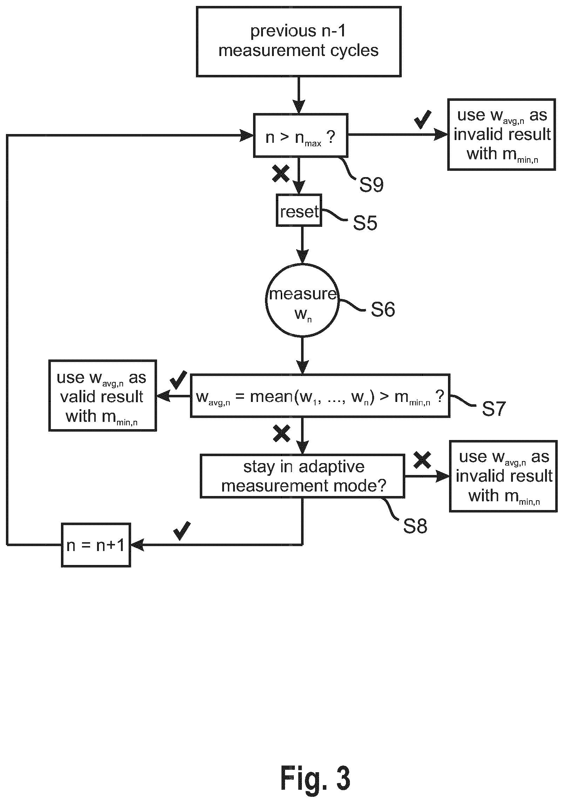

In the following, a method for operating the weighing system 10 will be described in more detail in relation with Figs. 2 and 3.

First, an initial minimum weight value $m_{min,1}$ is stored in the memory unit 32.

The initial minimum weight value $m_{min,1}$ can be determined using a calibration or performance check procedure and is especially calculated based on a mathematical function of a standard deviation of the balance 12. The chosen calibration or performance check procedure is especially based on regulatory requirements of the field of use for which the weighing system 10 is intended for.

E.g., the if the weighing system 10 is used for weighing active ingredients and/or other components for the preparation of pharmaceuticals, regulations for weighing procedures in the pharmaceutical industry apply on the weighing system 10. These regulations determine whether a measurement result obtained by the weighing system 10 can be deemed to be a "valid" or "invalid" measurement result.

Especially, in the calibration or performance check procedure, a reference sample is placed a predefined number of times on the sample carrier 18 and a corresponding weighing value is obtained each time.

From the weighing values obtained in this way, a standard deviation of the balance 12 can be determined which is used for calculating the initial minimum weight value $m_{min,1}$. The initial minimum weight value $m_{min,1}$ is then stored in the memory unit 32 of the electronic control apparatus 14 (step S1 in Fig. 2) .

E.g., the initial minimum weight value $m_{min,1}$ is determined according to the formula 2000 x f x s, with s being the standard deviation of the balance 12 and f being a safety factor. The safety factor f can be chosen by the user via the user interface 34 or by a pre-defined security level of the weighing system 10 which is stored in the memory unit 32. Generally, the higher the pre-defined security level, the higher the safety factor f will be. E.g., f is chosen to be in the range of $1 \leq f \leq 3$.

The initial minimum net weight $m_{min,1}$ defines a minimum weight value obtained by the balance 12 which is still deemed to be a valid measurement result. That is, if a weight value obtained by the balance 12, more specifically by the weighing sensor 28, is lower than the initial minimum net weight $m_{min,1}$, the respective weight value is to be denoted as being invalid.

The user of the weighing system 10 would then have to either choose another balance 12 with a lower initial minimum net weight $m_{min,1}$ or must use larger amounts of sample 24 which is unfavorable especially in the case of expensive substances.

Thus, the weighing system 10 according to the invention is configured for being operated in an adaptive weighing mode, if necessary.

Specifically, a first weight value $w_1$ of the sample 24 is measured by the weighing sensor 28 and the first weight value $w_1$ is then transmitted to the processing unit 30 (step S2 in Fig. 2).

Optionally, before the first weight value $w_1$ is determined, a tare value $w_{tare}$ of the receptacle 26 which is used for the further weight measurements of the sample 24 is determined via the weighing sensor 28 and also transmitted to the processing unit 30 and the memory unit 32, which stores the tare value $w_{tare}$. Accordingly, all subsequent weight values of the sample 24 can be corrected by the processing unit 30 for the tare value $w_{tare}$ by subtracting the tare value $w_{tare}$ from the respective weight value. Accordingly, if in the following weight values are compared with other values, the respective weight values are especially corrected for the tare value $w_{tare}$.

The processing unit 30 compares the first weight value $w_1$ with the initial minimum weight value $m_{min,1}$ (step S3 in Fig. 2). More specifically, the processing unit 30 checks if the first weight value $w_1$ is larger than the initial minimum weight value $m_{min,1}$.

If this is the case, the first weight value $w_1$ can be deemed to be a valid result of the weighing system 10, based on a single-time measurement of the sample 24.

The processing unit can thus assign a validation information "valid" to the first weight value $w_1$ and the first weight value $w_1$ is stored together with the validation information in the memory unit 32.

Additionally, the user can be informed via the display 36 that the first weight value $w_1$ has been found to be a valid measurement result.

If the first weight value $w_1$ has been found to be smaller than the initial minimum weight value $m_{min,1}$ in step S3, the processing unit 30 can set the weighing system 10 in the adaptive weighing mode.

Switching the weighing system 10 in the adaptive weighing mode can be done automatically as soon as the first weight value $w_1$ has been found to be smaller than the initial minimum weight value $m_{min,1}$.

However, the weighing system 10 first may provide a first message to the user via the user interface 34 that the adaptive weighing mode is to be entered for obtaining a valid measurement result. The user then has to either confirm or decline if the adaptive weighing mode is to be entered.

If the user does not accept entering the adaptive weighing mode, the processing unit 30 associates the first weight value $w_1$ with the validation information "invalid" and the first weight value $w_1$ is stored together with the validation information in the memory unit 32. This situation is of advantage, if the user at this point in time does not wish to conduct the additional measurements which will become necessary in the adaptive weighing mode. Thus, the time a given user blocks the weighing system 10 for the current measurement can be reduced.

Further, the processing unit 30 can calculate an estimated number of measurements which will be necessary until the overall measurement result can be deemed to be valid and provide the user with a second message on the user interface 34, the second message being indicative of the estimated number. Therefore, the user can base his decision whether the adaptive weighing mode is to be entered or not on the additional information provided by the estimated number. That is, it is easy for the user to assess whether the expected additional effort of the adaptive weighing mode is actually necessary for the present sample 24.

Preferably, the second message is provided to the user together with the first message.

The estimated number of repetitions can be determined as the square of the ratio of the initial minimum weight $m_{min,1}$ and the first weight value $w_1$, rounded up to the next integer. That is, the estimated number of repetitions $n_{est}$ can be calculated according to

$$n_{est} = \left\lceil \left( \frac{m_{min,1}}{w_1} \right)^2 \right\rceil .$$

Further, whether the adaptive weighing mode is offered to the user at all or not can be determined based on the pre-defined security level of the weighing system 10.

That is, if the security level of the weighing system 10 is below a first threshold security level, the weighing system 10 can also not provide a choice to the user to enter the adaptive measurement mode at all. Thus, the user of the weighing system 10 can use the weighing system 10 in a conventional manner without having to take any decision regarding the adaptive measurement mode. The use of the weighing system 10 is thus facilitated, as the user does not need to choose whether the adaptive weighing mode shall be entered or not. This option is especially useful if the weighing system 10 is, at least temporarily, used for applications with no or less strict requirements regarding validity of measurement results.

If the security level of the weighing system 10 is above a second threshold security level, the weighing system 10 can mandatorily be set in the adaptive weighing mode by the processing unit 30. Thus, the user is only provided with the first message, and optionally the second message, to inform about the adaptive weighing mode, but without the possibility to cancel the upcoming adaptive weighing mode. This option is especially useful if the weighing system 10 is only to be used for applications with strict requirements regarding validity of measurement results such that invalid measurements can be avoided as much as possible.

If the pre-defined security level is between the first threshold security level and the second threshold security level, the user can be provided with the above-described choice regarding entering the adaptive weighing mode or not.

Further, a maximum number of repeated measurements $n_{max}$, which has been stored before in the memory unit 32, can be compared with the estimated number of repeated measurements $n_{est}$ by the processing unit 30.

The maximum number of repeated measurements $n_{max}$ can be defined based on an input of the user via the user interface 34 and/or determined automatically by the processing unit 30 based on the security level of the weighing system 10.

The maximum number of repeated measurements $n_{max}$ is then compared with the estimated number of repeated measurements $n_{est}$ and a third message can be provided via the user interface 34 to the user, the third message being indicative of whether the maximum number of repeated measurements $n_{max}$ is lower than or equal to the estimated number of repeated measurements $n_{est}$ or not. Based on this information, the user can take this information into account in the decision whether the adaptive weighing mode is to be entered or not.

Thus, dependent on the application scenario, the weighing system 10 can be operated in a highly flexible manner to decide whether the adaptive measurement mode is to be entered or not (step S4 in Fig. 2).

In the adaptive measurement mode, the user is provided via the user interface 34 with an instruction to remove the sample 24 and the receptacle 26 from the sample carrier 18 and to reset the balance 12 (step S5 in Fig. 2).

In response, the indication of the current weight value on the display 36 obtained by the weighing sensor 28 will be set to minus the tare value $w_{tare}$.

Then, the sample 24 is placed together with the receptacle 26 back onto the sample carrier 18 and a further weight value $w_2$ is measured by the weighing sensor 28 and transmitted to the processing unit 30 (step S6).

In the processing unit 30, an average weight value of the sample 24 is calculated based on the first weight value $w_1$ and the further weight value $w_2$, the average weight value being the mean value of the first weight value $w_1$ and the further weight value $w_2$.

Further, the processing unit 30 determines an adapted minimum weight value $m_{min,2}$ based on the initial minimum weight value $m_{min,1}$ and the number of measurements repeated up to this point for the sample 24.

Specifically, the adapted minimum weight value $m_{min,2}$ is determined based on a mathematical function in which the standard deviation of the balance 12 is taken into account. However, the relevant standard deviation taken into account is calculated as $s_n = s_1/\sqrt{n}$ with $s_1$ being the standard deviation connected to the measurement of the first weight value of the sample (i.e., the standard deviation s determined in the calibration or performance check procedure), n being the number of repeated measurements, including the measurement for obtaining the first weight value of the sample (i.e., at this point n equals 2), and $s_n$ being the relevant standard deviation connected to the mean of the weight values obtained in the repeated measurements.

Thus, the standard deviation, and therefore the adapted minimum weight value, decreases with the number of repeated measurements taken for the same sample 24.

Optionally, the processing unit 30 compares the adapted minimum weight value $m_{min,2}$ with a lower bound minimum weight value $m_{low}$, the lower bound minimum weight value $m_{low}$ defining a lowest minimum weight value which results in a valid measurement.

The lower bound minimum weight value $m_{low}$ can read from the memory unit 32, in which it has been stored before. The lower bound minimum weight value $m_{low}$ is especially defined based on the scale interval of the balance 12 or can be user-adaptable via the user interface 34.

If the adapted minimum weight value $m_{min,2}$ is lower than the lower bound minimum weight value $m_{low}$, the adapted minimum weight value $m_{min,2}$ is replaced with the lower bound minimum weight value $m_{low}$.

The processing unit 30 then compares the average weight value $w_{avg,2}$ with the adapted minimum weight value $m_{min,2}$ (step S7 in Fig. 2). More specifically, the processing unit 30 checks if the average weight value $w_{avg,2}$ is larger than the adapted minimum weight value $m_{min,2}$.

If this is the case, the average weight value $w_{avg,2}$ can now be deemed to be a valid result of the weighing system 10, based on a double measurement of the sample 24.

The processing unit can thus assign a validation information "valid" to the average weight value $w_{avg,2}$ and the average weight value $w_{avg,2}$ is stored together with the validation information in the memory unit 32.

Additionally, the user can be informed via the display 36 that the average weight value $w_{avg,2}$ has been found to be a valid measurement result.

The processing unit 30 then terminates the adaptive weighing mode of the weighing system 10 and the weighing system 10 is ready for a next sample 24 to be measured.

If the average weight value $w_{avg,2}$ has been found to be smaller than the adapted minimum weight value $m_{min,2}$ in step S7, the processing unit 30 can provide the user via the user interface 34 with a further message inquiring a user input on whether the weighing system 10 is to stay in the adaptive measurement mode or if the adaptive measurement mode is to be left (step S8 in Fig. 2).

If the user chooses to end the adaptive measurement mode at this point, the processing unit 30 assigns to the average weight value $w_{avg,2}$ the validation information "invalid" and stores the average weight value $w_{avg,2}$ together with the validation information in the memory unit 32.

In case the lower bound minimum weight value $m_{low}$ has been taken into account and the adapted minimum weight value $m_{min,2}$ has been replaced by the lower bound minimum weight value $m_{low}$, the user can be provided with a corresponding information via the user interface 34. As the adapted minimum weight value $m_{min,2}$ cannot be reduced anymore at this point, the processing unit 30 can then assign to the average weight value $w_{avg,2}$ the validation information "invalid" and stores the average weight value $w_{avg,2}$ together with the validation information in the memory unit 32.

However, if the user chooses to keep the weighing system 10 in the adaptive measurement mode, the weighing system 10 continues with additional measurement cycles which are schematically shown in Fig. 3.

Of course, similar to step S4, the user can be informed about an updated estimated number of repeated measurements or cannot be provided with any choice at all based on the pre-defined security level of the weighing system 10.

The updated estimated number of repeated measurement can be determined as the square of the ratio of the adapted minimum weight $m_{min,2}$ and the average weight value $w_{avg}$ from which the square root of the number of repeated measurements n, including the measurement for obtaining the first weight value of the sample (i.e., at this point in time n equals 2), is subtracted, rounded up to the next integer. That is, the updated estimated number of remaining repetitions $n_{est,rem}$ can be calculated according to

$$n_{est,rem} = \left\lceil \left( \frac{m_{min,2}}{w_{avg,2}} \right)^2 - \sqrt{n} \right\rceil .$$

Fig. 3 generally provides a block scheme of further measurement cycles in the adaptive measurement mode, after coming from previous measurement cycles, especially the one described before in relation to Fig. 2. In the above-described embodiment, the scheme of Fig. 3 would be entered with n being equal to 3, as two prior weight measurements of the sample have been taken place before.

In step S9, the processing unit 30 compares the current number of repeated measurements with the maximum number of repeated measurements $n_{max}$, which has been stored before in the memory unit 32.

If the current number of repeated measurements is larger than the maximum number of repeated measurements $n_{max}$, the current average weight value $w_{avg,n}$ is associated with the validation information "invalid" and stored together with the validation information in the memory unit 32.

If the current number of repeated measurements is equal to or lower than the maximum number of repeated measurements $n_{max}$, an additional measurement cycle analogue to the one described before in conjunction with steps S5 to S8 is conducted.

That is, first the user is provided via the user interface 34 with an instruction to remove the sample 24 and the receptacle 26 from the sample carrier 18 and to reset the balance 12 (step S5 in Fig. 3), the sample 24 is placed together with the receptacle 26 back onto the sample carrier 18 and a further weight value $w_n$ (instead of $w_2$) is measured by the weighing sensor 28 and transmitted to the processing unit 30 (step S6 in Fig. 3).

In the processing unit 30, an average weight value of the sample 24 is calculated based on the first weight value $w_1$ and the further weight values $w_2$ to $w_n$, the average weight value being the mean value of the first weight value $w_1$ and the further weight values $w_2$ to $w_n$.

Further, the processing unit 30 determines an adapted minimum weight value $m_{min,n}$ based on the initial minimum weight value $m_{min,1}$ and the number of measurements repeated up to this point for the sample 24, especially based on the same mathematical function which has been used before for determining $m_{min,2}$, but with n being the current number of repeated measurements.

Optionally, the adapted minimum weight value $m_{min,n}$ is compared with the lower bound minimum weight value $m_{low}$ as described before.

The processing unit 30 then compares the average weight value $w_{avg,n}$ with the adapted minimum weight value $m_{min,n}$ (step S7 in Fig. 3). More specifically, the processing unit 30 checks if the average weight value $w_{avg,n}$ is larger than the adapted minimum weight value $m_{min,n}$.

If this is the case, the average weight value $w_{avg,n}$ can now be deemed to be a valid result of the weighing system 10, based on the current number of repeated measurements of the sample 24.

The processing unit 30 can thus assign a validation information "valid" to the average weight value $w_{avg,n}$ and the average weight value $w_{avg,n}$ is stored together with the validation information in the memory unit 32.

Additionally, the user can be informed via the display 36 that the average weight value $w_{avg,n}$ has been found to be a valid measurement result.

The processing unit 30 then terminates the adaptive weighing mode of the weighing system 10 and the weighing system 10 is ready for a next sample 24 to be measured.

If the average weight value $w_{avg,n}$ has been found to be smaller than the adapted minimum weight value $m_{min,n}$ in step S7, the processing unit 30 can provide the user via the user interface 34 with a further message inquiring a user input on whether the weighing system 10 is to stay in the adaptive measurement mode or if the adaptive measurement mode is to be left (step S8 in Fig. 3).

If the user chooses to end the adaptive measurement mode at this point, the processing unit 30 assigns to the average weight value $w_{avg,n}$ the validation information "invalid" and stores the average weight value $w_{avg,n}$ together with the validation information in the memory unit 32.

However, if the user chooses to keep the weighing system 10 in the adaptive measurement mode, the weighing system 10 continues with step S9 again, wherein the number of repeated measurements n is increased by one.

Thus, it becomes clear that the method steps as shown in Fig. 3 essentially correspond to the ones associated to the weight value $w_2$ described before in conjunction with Fig. 2.

Overall, a cyclic and consistent procedure is provided for operating the weighing system 10 which enables to reach much lower effective minimum weight values than would be possible with a given balance 12 based on individual weight measurements of the sample 24.

However, even in a case in which the adapted minimum weight $m_{min,n}$ cannot be lowered sufficiently to be lower than the average weight value $w_{avg,m}$ with a reasonable number of measurement cycles, the reliability of the obtained average weight values $w_{avg,n}$ can be increased.

Further, the method can be implemented in such a way that the user of the weighing system 10 can be informed about the current state of the weighing process and gives the user regular possibilities to leave the adaptive weighing mode, if necessary, even in cases in which no valid result has yet been obtained. Thus, the weighing system 10 of the invention can be used in a highly flexible manner and situations are avoided in which the weighing system 10 is unnecessarily blocked by an ongoing measurement in the adaptive weighing mode.

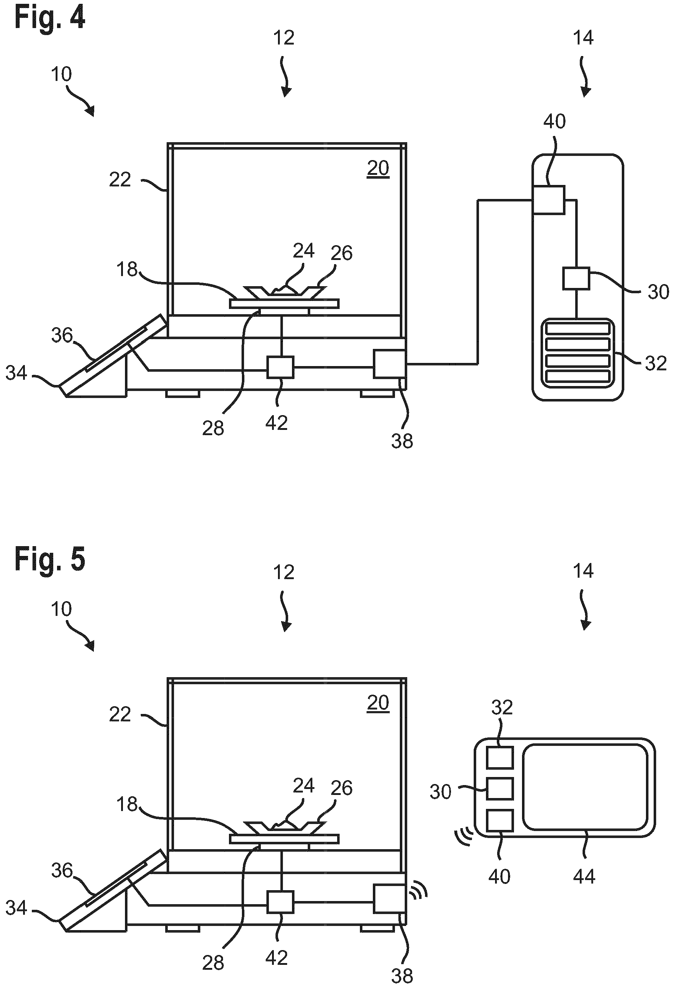

Fig.4 shows a second embodiment of the weighing system 10 according to the invention.

The second embodiment essentially corresponds to the first embodiment, such that in the following only differences will be discussed. The same features and advantages discussed for the first embodiment apply for the second embodiment, too, and vice versa.

In the second embodiment, the balance 12 and the electronic control apparatus 14 are separate devices. That is, the balance 12 and the electronic control apparatus 14 are not contained in a common housing.

For establishing a communication link between the balance 12 and the electronic control apparatus 14, the balance 12 comprises a balance communication module 38 and the electronic control apparatus 14 comprises an electronic control apparatus communication module 40, wherein the balance communication module 38 and the electronic control apparatus communication module 40 are bi-directionally communicatively linked to each other.

In Fig. 4, a cable-based connection between the balance communication module 38 and the electronic control apparatus communication module 40 is shown. Of course, the connection could also be realized wireless, e.g. via a Wi-Fi or Bluetooth connection.

In the second embodiment, the balance 12 comprises a balance processing unit 42 which is configured to operate the balance 12 if the communication link to the processing unit 30 is lost. Thus, even if the communication link between the balance 12 and the electronic control apparatus 14 is interrupted and the balance 12 at least temporarily cannot receive instructions from the processing unit 30, the balance 12 itself will remain operational.

The balance processing unit 42 can also comprise an internal storage in which weight values obtained by the weighing sensor 28 can be stored at least temporarily before being transferred to the memory unit 32 of the electronic control apparatus 14, especially after an interrupted communication link to the electronic control apparatus has been re-established.

In the second embodiment, the electronic control apparatus 14 is a server providing a central network environment in which the balance 12 is incorporated. E.g., the electronic control apparatus 14 can provide a lab network environment with integrated laboratory management functions.

Fig. 5 shows a third embodiment of the weighing system 10 according to the invention.

The third embodiment essentially corresponds to the first and second embodiments, such that in the following only differences will be discussed. The same features and advantages discussed for the first and second embodiments apply for the third embodiment, too, and vice versa.

In the third embodiment, the electronic control apparatus 14 is a mobile handheld device, e.g. a smartphone or a tablet the user can interact with.

The balance 12 and the electronic control apparatus 14 are connected by a wireless connection, e.g. via a Wi-Fi or Bluetooth connection.

The electronic control apparatus 14 has a further display 54 which can be used for displaying some or all of the messages described before in relation to the display 36 of the user interface 34 of the balance 12. Thus, in principle, the balance 12 used in the third embodiment can also have no display 36 without losing the ability to interact with the user of the weighing system 10.

The use of a separate handheld device as an electronic control apparatus 14 further simplifies the design of the overall weighing system 10 and further increases the user experience. Also, the electronic control apparatus 14 can easily be exchanged in case of defects without having to re-design the overall weighing system 10 or having to accept extended maintenance periods in which the weighing system 10 is not available.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

**Claims**

1. A method for operating a weighing system (10), the weighing system (10) comprising

   - a balance (12) with a sample carrier (18) for receiving a sample (24) to be weighed,
   - a weighing sensor (28) connected to the sample carrier (18) and adapted to measure weight values of the sample (24),
   - an electronic control apparatus (14) for controlling the operation of the weighing system (10) comprising a processing unit (30) connected to the weighing sensor (28) and a memory unit (32) connected to the processing unit (30), the method comprising the steps:

   a) storing an initial minimum weight value in the memory unit (32),
   b) measuring, by the weighing sensor (28), a first weight value of the sample (24),
   c) transmitting the first weight value to the processing unit (30),
   d) comparing, by the processing unit (30), the first weight value with the initial minimum weight value, and
   e) setting, by the processing unit (30), the weighing system (10) in an adaptive weighing mode, if the first weight value is smaller than the initial minimum weight value,
   wherein, in the adaptive weighing mode of the weighing system (10), the processing unit (30)

   determines an adapted minimum weight value based on the initial minimum weight value and a number of repeated weight measurements of the sample (24), and
   compares the adapted minimum weight value with an average weight value of the sample (24), wherein the average weight value is based on the first weight value and on weight values of the sample measured by the weighing sensor (28) in the repeated weight measurements and being transmitted to the processing unit (30).

2. The method of claim 1, wherein the processing unit (30) terminates the adaptive weighing mode when the average weight value is higher than the adapted minimum weight value.

3. The method of claim 1 or 2, wherein the initial minimum weight value is a mathematical function of a standard deviation of the balance (12) determined in a calibration or performance check procedure.

4. The method of any of the preceding claims, the method further comprising the following steps:

   - storing a lower bound minimum weight value in the memory unit (32), and

- comparing, by the processing unit (30), the lower bound minimum weight value with the adapted minimum weight value, and, in case the adapted minimum weight value is smaller than the lower bound minimum weight value, the adapted minimum weight value is replaced with the lower bound minimum weight value.

5. The method of any of the preceding claims, wherein the weighing system (10) comprises a user interface (34), and, if the first weight value is smaller than the initial minimum weight value, the weighing system (10) provides a first message to the user of the weighing system (10) via the user interface (34) that the adaptive weighing mode is to be initiated.

6. The method of claim 5, the method further comprising the following steps:

- calculating, by the processing unit (30), an estimated number of repeated measurements necessary to obtain an adapted minimum weight value which is smaller than the first weight value or the average weight value, and
- providing, via the user interface (34), a second message to the user indicative of the estimated number.

7. The method of claim 6, the method further comprising the following steps:

- storing a maximum number of repeated measurements in the memory unit (32),
- comparing, by the processing unit (30), the maximum number of repeated measurements with the estimated number of repeated measurements, and
- providing, via the user interface (34), a third message to the user indicative of whether the maximum number of repeated measurements is lower than the estimated number of repeated measurement or not.

8. The method according to any of the preceding claims, the method further comprising the following steps:

- assigning, by the processing unit (30), the first weight value and/or the average weight value with a validation information, wherein the validation information indicates whether the first weight value and/or the average weight value is smaller than the initial minimum weight value and the adapted minimum weight value, respectively, or not, and
- storing the first weight value and/or the average weight value together with the associated validation information in the memory unit (32).

9. The method according to any of the preceding claims, the method further comprising the following step:

- storing, in the memory unit (32), a counter indicative of the sample (24) and an information on whether the adaptive weighing mode has been entered.

10. A weighing system (10), the weighing system (10) comprising

a balance (12) with a sample carrier (18) for receiving a sample (24) to be weighed,
a weighing sensor (28) connected to the sample carrier (18) and adapted to measure weight values of the sample (24), and
an electronic control apparatus (14) for controlling the operation of the weighing system (10) comprising a processing unit (30) connected to the weighing sensor (28) and a memory unit (32) connected to the processing unit (30), the weighing system (10) being configured to execute the method of any of the preceding claims.

11. Weighing system (10) according to claim 10, the weighing system (10) further comprising a user interface (34), the user interface (34) being part of the balance (12) or of the electronic control apparatus (14).

12. Weighing system (10) according to claim 10 or 11, wherein the balance (12) and the electronic control apparatus (14) are contained within a common housing (16).

13. Weighing system (10) according to claim 10 or 11, wherein the electronic control apparatus (14) is a separate device being configured to receive and transmit information to and from the balance (12), respectively.

14. A computer program comprising instructions to cause a weighing system (10) of any of claims 10-13 to perform the steps of the method of any of claims 1 to 9.

15. A computer-readable storage medium having stored thereon the computer program of claim 14.

**Patentansprüche**

1. Verfahren zum Betreiben eines Wägesystems (10), wobei das Wägesystem (10) umfasst:

- eine Waage (12) mit einem Probenträger (18) zur Aufnahme einer zu wiegenden Probe (24),

- einen mit dem Probenträger (18) verbundenen Wägesensor (28), der zum Messen von Gewichtswerten der Probe (24) ausgebildet ist,
- eine elektronische Steuervorrichtung (14) zum Steuern des Betriebs des Wägesystems (10), die eine mit dem Wägesensor (28) verbundene Verarbeitungseinheit (30) und eine mit der Verarbeitungseinheit (30) verbundene Speichereinheit (32) umfasst, wobei das Verfahren die folgenden Schritte umfasst:

a) Speichern eines anfänglichen Mindestgewichtswerts in der Speichereinheit (32),
b) Messen, durch den Wägesensor (28), eines ersten Gewichtswerts der Probe (24),
c) Übertragen des ersten Gewichtswerts an die Verarbeitungseinheit (30),
d) Vergleichen, durch die Verarbeitungseinheit (30), des ersten Gewichtswerts mit dem anfänglichen Mindestgewichtswert, und
e) Versetzen, durch die Verarbeitungseinheit (30), des Wägesystems (10) in einen adaptiven Wägemodus, wenn der erste Gewichtswert kleiner als der anfängliche Mindestgewichtswert ist,

wobei im adaptiven Wägemodus des Wägesystems (10) die Verarbeitungseinheit (30)

einen angepassten Mindestgewichtswert basierend auf dem anfänglichen Mindestgewichtswert und einer Anzahl von wiederholten Gewichtsmessungen der Probe (24) bestimmt, und den angepassten Mindestgewichtswert mit einem durchschnittlichen Gewichtswert der Probe (24) vergleicht, wobei der durchschnittliche Gewichtswert auf dem ersten Gewichtswert und auf Gewichtswerten der Probe basiert, die durch den Wägesensor (28) in den wiederholten Gewichtsmessungen gemessen und an die Verarbeitungseinheit (30) übertragen werden.

2. Verfahren nach Anspruch 1, wobei die Verarbeitungseinheit (30) den adaptiven Wägemodus beendet, wenn der durchschnittliche Gewichtswert höher als der angepasste Mindestgewichtswert ist.

3. Verfahren nach Anspruch 1 oder 2, wobei der anfängliche Mindestgewichtswert eine mathematische Funktion einer Standardabweichung der Waage (12) ist, die in einem Kalibrierungs- oder Leistungsprüfungsverfahren bestimmt wird.

4. Verfahren nach einem der vorhergehenden Ansprüche, wobei das Verfahren ferner die folgenden Schritte umfasst:

- Speichern eines unteren Grenzwerts für den Mindestgewichtswert in der Speichereinheit (32), und
- Vergleichen, durch die Verarbeitungseinheit (30), des unteren Grenzwerts für den Mindestgewichtswert mit dem angepassten Mindestgewichtswert, und, falls der angepasste Mindestgewichtswert kleiner als der untere Grenzwert für den Mindestgewichtswert ist, wird der angepasste Mindestgewichtswert durch den unteren Grenzwert für den Mindestgewichtswert ersetzt.

5. Verfahren nach einem der vorhergehenden Ansprüche, wobei das Wägesystem (10) eine Benutzerschnittstelle (34) umfasst, und, wenn der erste Gewichtswert kleiner als der anfängliche Mindestgewichtswert ist, das Wägesystem (10) dem Benutzer des Wägesystems (10) über die Benutzerschnittstelle (34) eine erste Nachricht bereitstellt, dass der adaptive Wägemodus eingeleitet werden soll.

6. Verfahren nach Anspruch 5, wobei das Verfahren ferner die folgenden Schritte umfasst:

- Berechnen, durch die Verarbeitungseinheit (30), einer geschätzten Anzahl von wiederholten Messungen, die erforderlich sind, um einen angepassten Mindestgewichtswert zu erhalten, der kleiner als der erste Gewichtswert oder der durchschnittliche Gewichtswert ist, und
- Bereitstellen, über die Benutzerschnittstelle (34), einer zweiten Nachricht an den Benutzer, die die geschätzte Anzahl angibt.

7. Verfahren nach Anspruch 6, wobei das Verfahren ferner die folgenden Schritte umfasst:

- Speichern einer maximalen Anzahl von wiederholten Messungen in der Speichereinheit (32),
- Vergleichen, durch die Verarbeitungseinheit (30), der maximalen Anzahl von wiederholten Messungen mit der geschätzten Anzahl von wiederholten Messungen, und
- Bereitstellen, über die Benutzerschnittstelle (34), einer dritten Nachricht an den Benutzer, die angibt, ob die maximale Anzahl von wiederholten Messungen niedriger als die geschätzte Anzahl von wiederholten Messungen ist oder nicht.

8. Verfahren nach einem der vorhergehenden Ansprüche, wobei das Verfahren ferner die folgenden Schritte umfasst:

- uweisen, durch die Verarbeitungseinheit (30), einer Validierungsinformation zu dem ersten Gewichtswert und/oder dem durchschnittlichen Gewichtswert, wobei die Validierungsinformation angibt, ob der erste Gewichtswert und/oder der durchschnittliche Gewichtswert kleiner als der anfängliche Mindestgewichtswert bzw. der angepasste Mindestgewichtswert ist oder nicht, und

- Speichern des ersten Gewichtswerts und/oder des durchschnittlichen Gewichtswerts zusammen mit der zugehörigen Validierungsinformation in der Speichereinheit (32).

9. Verfahren nach einem der vorhergehenden Ansprüche, wobei das Verfahren ferner den folgenden Schritt umfasst:

- Speichern, in der Speichereinheit (32), eines Zählers, der die Probe (24) angibt, und einer Information darüber, ob der adaptive Wägemodus aktiviert wurde.

10. Wägesystem (10), wobei das Wägesystem (10) umfasst:

eine Waage (12) mit einem Probenträger (18) zur Aufnahme einer zu wiegenden Probe (24), einen mit dem Probenträger (18) verbundenen Wägesensor (28), der zum Messen von Gewichtswerten der Probe (24) ausgebildet ist, und eine elektronische Steuervorrichtung (14) zum Steuern des Betriebs des Wägesystems (10), die eine mit dem Wägesensor (28) verbundene Verarbeitungseinheit (30) und eine mit der Verarbeitungseinheit (30) verbundene Speichereinheit (32) umfasst, wobei das Wägesystem (10) konfiguriert ist, das Verfahren nach einem der vorhergehenden Ansprüche auszuführen.

11. Wägesystem (10) nach Anspruch 10, wobei das Wägesystem (10) ferner eine Benutzerschnittstelle (34) umfasst, wobei die Benutzerschnittstelle (34) Teil der Waage (12) oder der elektronischen Steuervorrichtung (14) ist.

12. Wägesystem (10) nach Anspruch 10 oder 11, wobei die Waage (12) und die elektronische Steuervorrichtung (14) in einem gemeinsamen Gehäuse (16) enthalten sind.

13. Wägesystem (10) nach Anspruch 10 oder 11, wobei die elektronische Steuervorrichtung (14) eine separate Vorrichtung ist, die konfiguriert ist, Informationen von der Waage (12) zu empfangen bzw. an diese zu übertragen.

14. Computerprogramm, das Anweisungen umfasst, um ein Wägesystem (10) nach einem der Ansprüche 10-13 zu veranlassen, die Schritte des Verfahrens nach einem der Ansprüche 1 bis 9 auszuführen.

15. Computerlesbares Speichermedium, auf dem das Computerprogramm nach Anspruch 14 gespeichert ist.

## Revendications

1. Procédé de fonctionnement d'un système de pesage (10), le système de pesage (10) comprenant

- une balance (12) avec un porte-échantillon (18) pour recevoir un échantillon (24) à peser,
- un capteur de pesage (28) connecté au porte-échantillon (18) et adapté pour mesurer des valeurs de poids de l'échantillon (24),
- un appareil de commande électronique (14) pour commander le fonctionnement du système de pesage (10) comprenant une unité de traitement (30) connectée au capteur de pesage (28) et une unité de mémoire (32) connectée à l'unité de traitement (30), le procédé comprenant les étapes :

a) stockage d'une valeur de poids minimum initiale dans l'unité de mémoire (32),
b) mesure, par le capteur de pesage (28), d'une première valeur de poids de l'échantillon (24),
c) transmission de la première valeur de poids à l'unité de traitement (30),
d) comparaison, par l'unité de traitement (30), de la première valeur de poids avec la valeur de poids minimum initiale, et
e) réglage, par l'unité de traitement (30), du système de pesage (10) dans un mode de pesage adaptatif, si la première valeur de poids est inférieure à la valeur de poids minimum initiale,

dans lequel, dans le mode de pesage adaptatif du système de pesage (10), l'unité de traitement (30)

détermine une valeur de poids minimum adaptée sur la base de la valeur de poids minimum initiale et d'un nombre de mesures de poids répétées de l'échantillon (24), et

compare la valeur de poids minimum adaptée avec une valeur de poids moyenne de l'échantillon (24), dans lequel la valeur de poids moyenne est basée sur la première valeur de poids et sur des valeurs de poids de l'échantillon mesurées par le capteur de pesage (28) dans les mesures de poids répétées et étant transmises à l'unité de traitement (30).

**2.** Procédé selon la revendication 1, dans lequel l'unité de traitement (30) termine le mode de pesage adaptatif lorsque la valeur de poids moyenne est supérieure à la valeur de poids minimum adaptée.

**3.** Procédé selon la revendication 1 ou 2, dans lequel la valeur de poids minimum initiale est une fonction mathématique d'un écart-type de la balance (12) déterminé dans une procédure d'étalonnage ou de vérification de performance.

**4.** Procédé selon l'une quelconque des revendications précédentes, le procédé comprenant en outre les étapes suivantes :

- stockage d'une valeur de poids minimum de limite inférieure dans l'unité de mémoire (32), et
- comparaison, par l'unité de traitement (30), de la valeur de poids minimum de limite inférieure avec la valeur de poids minimum adaptée, et, dans le cas où la valeur de poids minimum adaptée est inférieure à la valeur de poids minimum de limite inférieure, la valeur de poids minimum adaptée est remplacée par la valeur de poids minimum de limite inférieure.

**5.** Procédé selon l'une quelconque des revendications précédentes, dans lequel le système de pesage (10) comprend une interface utilisateur (34), et, si la première valeur de poids est inférieure à la valeur de poids minimum initiale, le système de pesage (10) fournit un premier message à l'utilisateur du système de pesage (10) via l'interface utilisateur (34) indiquant que le mode de pesage adaptatif doit être initié.

**6.** Procédé selon la revendication 5, le procédé comprenant en outre les étapes suivantes :

- calcul, par l'unité de traitement (30), d'un nombre estimé de mesures répétées nécessaires pour obtenir une valeur de poids minimum adaptée qui est inférieure à la première valeur de poids ou à la valeur de poids moyenne, et
- fourniture, via l'interface utilisateur (34), d'un deuxième message à l'utilisateur indicatif du nombre estimé.

**7.** Procédé selon la revendication 6, le procédé comprenant en outre les étapes suivantes :

- stockage d'un nombre maximum de mesures répétées dans l'unité de mémoire (32),
- comparaison, par l'unité de traitement (30), du nombre maximum de mesures répétées avec le nombre estimé de mesures répétées, et
- fourniture, via l'interface utilisateur (34), d'un troisième message à l'utilisateur indicatif de si le nombre maximum de mesures répétées est inférieur au nombre estimé de mesures répétées ou non.

**8.** Procédé selon l'une quelconque des revendications précédentes, le procédé comprenant en outre les étapes suivantes :

- attribution, par l'unité de traitement (30), à la première valeur de poids et/ou à la valeur de poids moyenne d'une information de validation, dans lequel l'information de validation indique si la première valeur de poids et/ou la valeur de poids moyenne est inférieure à la valeur de poids minimum initiale et à la valeur de poids minimum adaptée, respectivement, ou non, et
- stockage de la première valeur de poids et/ou de la valeur de poids moyenne conjointement avec l'information de validation associée dans l'unité de mémoire (32).

**9.** Procédé selon l'une quelconque des revendications précédentes, le procédé comprenant en outre l'étape suivante :

- stockage, dans l'unité de mémoire (32), d'un compteur indicatif de l'échantillon (24) et d'une information indiquant si le mode de pesage adaptatif a été activé.

**10.** Système de pesage (10), le système de pesage (10) comprenant

une balance (12) avec un porte-échantillon (18) pour recevoir un échantillon (24) à peser, un capteur de pesage (28) connecté au porte-échantillon (18) et adapté pour mesurer des valeurs de poids de l'échantillon (24), et un appareil de commande électronique (14) pour commander le fonctionnement du système de pesage (10) comprenant une unité de traitement (30) connectée au capteur de pesage (28) et une unité de mémoire (32) connectée à l'unité de traitement (30), le système de pesage (10) étant configuré pour exécuter le procédé selon l'une quelconque des revendications précédentes.

**11.** Système de pesage (10) selon la revendication 10, le système de pesage (10) comprenant en outre une interface utilisateur (34), l'interface utilisateur (34) faisant partie de la balance (12) ou de l'appareil de commande électronique (14).

**12.** Système de pesage (10) selon la revendication 10 ou 11, dans lequel la balance (12) et l'appareil de commande électronique (14) sont contenus dans un boîtier commun (16).

**13.** Système de pesage (10) selon la revendication 10 ou 11, dans lequel l'appareil de commande électronique (14) est un dispositif séparé configuré pour recevoir et transmettre des informations vers et depuis la balance (12), respectivement.

**14.** Programme informatique comprenant des instructions pour amener un système de pesage (10) selon l'une quelconque des revendications 10 à 13 à exécuter les étapes du procédé selon l'une quelconque des revendications 1 à 9.

**15.** Support de stockage lisible par ordinateur sur lequel est stocké le programme informatique selon la revendication 14.

Fig. 1

store $m_{min,1}$ — S1

measure $w_1$ — S2

$w_1 > m_{min,1}$ ? — S3

use $w_1$ as valid result with $m_{min,1}$ ✔

enter adaptive measurement mode? ✖ → use $w_1$ as invalid result with $m_{min,1}$ — S4

✔ reset — S5

measure $w_2$ — S6

$w_{avg,2} = \text{mean}(w_1, w_2) > m_{min,2}$ ? — S7

use $w_{avg,2}$ as valid result with $m_{min,2}$ ✔

stay in adaptive measurement mode? ✖ → use $w_{avg,2}$ as invalid result with $m_{min,2}$ — S8

✔ continue with measurement cycles

Fig. 2

previous n-1
measurement cycles

$n > n_{max}$ ?

use $w_{avg,n}$ as
invalid result
with $m_{min,n}$

✔

✗

S9

reset — S5

measure
$w_n$
— S6

use $w_{avg,n}$ as
valid result
with $m_{min,n}$

✔

$w_{avg,n} = mean(w_1, ..., w_n) > m_{min,n}$ ?

S7

✗

stay in adaptive
measurement mode?

✗

use $w_{avg,n}$ as
invalid result
with $m_{min,n}$

S8

$n = n+1$

✔

## Fig. 3

**Fig. 4**

**Fig. 5**

**EP 4 498 046 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3739307 A1